# EUROPEAN PATENT APPLICATION

(11) **EP 4 733 049 A1**
(43) Date of publication of application: **29.04.2026**
(21) Application number: 24851502.5
(22) Date of filing: 10.07.2024
(51) Int. Cl.: B29D 30/30

(54) **DEVICE AND METHOD FOR PRODUCING CYLINDRICAL TIRE MEMBER**

(30) Priority: 08.08.2023 JP 2023129625
(71) Applicant: The Yokohama Rubber Co., Ltd., Hiratsuka-shi, Kanagawa 254-8601 (JP)
(72) Inventor: KONDO, Masatomo, Hiratsuka-shi, Kanagawa 254-8601 (JP); MATSUMURA, Kensuke, Hiratsuka-shi, Kanagawa 254-8601 (JP); NUMAZAKI, Yasushi, Hiratsuka-shi, Kanagawa 254-8601 (JP); KAWAI, Masahiro, Hiratsuka-shi, Kanagawa 254-8601 (JP); OISHI, Junpei, Hiratsuka-shi, Kanagawa 254-8601 (JP); ZENYOJI, Chihiro, Hiratsuka-shi, Kanagawa 254-8601 (JP); WATANABE, Takehiro, Hiratsuka-shi, Kanagawa 254-8601 (JP); SAITO, Dai, Hiratsuka-shi, Kanagawa 254-8601 (JP); MATSUMARU, Teruaki, Hiratsuka-shi, Kanagawa 254-8601 (JP); ONISHI, Kohei, Hiratsuka-shi, Kanagawa 254-8601 (JP); WATANABE, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024871
(87) International publication number: WO 2025/033073

(57) **Abstract**

Provided is a manufacturing device and method capable of manufacturing a high-quality cylindrical tire member with high productivity by smoothly and quickly supplying a forming drum body with a band-like tire material supplied in a flat state by a plurality of conveyors arranged side by side and accurately positioning the band-like tire material in a drum width direction. An upper structure portion (4) including a forming drum body (6) is disposed on a base portion (3). The base portion (3) and the upper structure portion (4) are connected by a vertical movement mechanism (9). A slide movement mechanism (8) integrally moves a drum unit (2) including the base portion (3), the upper structure portion (4), and the vertical movement mechanism (9) in the drum width direction. The vertical movement mechanism (9) vertically moves the upper structure portion (4) and moves the forming drum body (6) to a winding position. At the winding position, a drum movement mechanism (7) different from the slide movement mechanism (8) moves the forming drum body (6) in the drum width direction and winds tire materials (M1, M2) around the forming drum body (6) while correcting a variation in drum-widthwise positions of the tire materials (M1, M2).

## Description

### Technical Field

The present invention relates to a manufacturing device and method for a cylindrical tire member and particularly relates to a manufacturing device and method capable of manufacturing a high-quality cylindrical tire member with high productivity by smoothly and quickly supplying a forming drum body with a band-like tire material supplied in a flat state by a plurality of conveyors arranged side by side and accurately positioning the band-like tire material in a drum width direction.

### Background Art

A green tire is vulcanized to manufacture a tire. A green tire is formed by layering a large number of types of tire materials. For example, a green tire is formed by integrating an innerliner, a carcass material, a belt member, a tread rubber, a pair of bead members, and the like on a forming drum.

A device has been proposed that arranges conveyors that supply, in supplying a forming drum with a large number of types of band-like tire materials, the respective tire materials in a flat state in a range overlapping in a vertical direction and moves the forming drum in the vertical direction according to tip positions of the respective conveyors (see, for example, FIG. 2 of Patent Document 1). This conveyor arrangement helps make the device more compact. This forming drum 2 is moved in the drum width direction along a rail 8 to be disposed at a position in front of each of conveyors 10 arranged side by side, and the tire material supplied by each of the conveyors 10 is wound around the forming drum to manufacture a cylindrical tire member.

If there is a variation in a drum-widthwise position in one tire material supplied to the forming drum, the tire material is wound around the forming drum in a meandering state, which causes a decrease in the quality of the tire member manufactured in a cylindrical shape. In a case where a plurality of tire materials are sequentially wound around the forming drum and layered, if there is a variation in a drum-widthwise position of each tire material to be supplied, each tire material is layered while being shifted in the width direction, which causes a decrease in the quality of the tire member (multilayer structure) manufactured in a cylindrical shape. Moving the forming drum in the width direction with respect to the tire material to be supplied can correct the variation in the drum-widthwise position of the tire material. However, in the device proposed in Patent Document 1, not only the forming drum 2 but also an assembly unit 1 including a vertical support body 15 supporting the forming drum 2 and the like integrally move along the rail 8. Therefore, to correct the variation in the drum-widthwise position of the tire material, it is necessary to move the assembly unit 1 that is larger and heavier than the forming drum 2 in the drum width direction, and thus it is difficult to quickly move the forming drum 2 in the drum width direction. Accordingly, it is disadvantageous to smoothly and quickly supply the tire material to the forming drum and to wind the tire material while accurately positioning the tire material in the drum width direction, and thus there is room for improvement.

### Citation List

### Patent Literature

Patent Document 1: JP 2010-506766 T

### Summary of Invention

### Technical Problem

An object of the present invention is to provide a manufacturing device and method capable of manufacturing a high-quality cylindrical tire member with high productivity smoothly and quickly supplying a band-like tire material supplied in a flat state by a plurality of conveyors arranged side by side to a forming drum body and accurately positioning the band-like tire material in a drum width direction.

### Solution to Problem

To achieve the object described above, a manufacturing device for a cylindrical tire member according to an embodiment of the present invention includes: a conveyor configured to supply a tire material having a band shape in a flat state; a forming drum body around which the tire material supplied by the conveyor is wound and formed into a cylindrical shape; a plurality of the conveyors arranged side by side in the drum width direction; a slide movement mechanism configured to slide the forming drum body in a drum width direction; and a vertical movement mechanism configured to vertically move the forming drum body. An upper structure portion including the forming drum body is disposed on a base portion, the base portion and the upper structure portion are connected by the vertical movement mechanism, a drum unit including the base portion, the upper structure portion, and the vertical movement mechanism is integrally moved in the drum width direction by the slide movement mechanism, the upper structure portion includes a drum movement mechanism configured to move the forming drum body in the drum width direction, and the drum movement mechanism is installed as a different mechanism from the slide movement mechanism.

A manufacturing method for a cylindrical tire member according to an embodiment of the present invention including causing a plurality of conveyors to be arranged side by side in a drum width direction with respect to a forming drum body, in winding a tire material having a band shape supplied in a flat state by each of the conveyors around the forming drum body to form a cylindrical shape, using a slide movement mechanism configured to move the forming drum body in the drum width direction and a vertical movement mechanism configured to move the forming drum body in a vertical direction, moving the forming drum body to a winding position near a front edge portion of each of the conveyors configured to supply the tire material to the forming drum body, and then winding the tire material supplied by each of the conveyors around the forming drum body at the winding position. The manufacturing method includes: disposing an upper structure portion including the forming drum body on a base portion and connecting the base portion and the upper structure portion by a vertical movement mechanism, the upper structure portion including, separately from the slide movement mechanism, a drum movement mechanism configured to move the forming drum body in the drum width direction; integrally moving a drum unit including the base portion, the upper structure portion, and the vertical movement mechanism in the drum width direction by the slide movement mechanism, vertically moving the upper structure portion by the vertical movement mechanism, and moving the forming drum body to the winding position; and
at the winding position, by moving the forming drum body in the drum width direction by the drum movement mechanism, winding the tire material around the forming drum body while correcting a variation in a drum-widthwise position of the tire material.

### Advantageous Effects of Invention

According to an embodiment of the present invention, the drum unit is integrally moved in the drum width direction by the slide movement mechanism, and the upper structure portion is moved in the vertical direction by the vertical movement mechanism, whereby the forming drum body can be moved to the appropriate winding position where the tire material can be smoothly transferred from each of the conveyors to the forming drum body. At the winding position, by moving the forming drum body in the drum width direction by the drum movement mechanism, a variation in the drum-widthwise position of the tire material can be corrected in winding the tire material around the forming drum body. The drum movement mechanism moves the forming drum body in the drum width direction, rather than the drum unit, which is advantageous for quickly moving the forming drum body to a desired drum-widthwise position. Accordingly, the tire material can be smoothly and quickly supplied from the respective conveyors arranged side by side to the forming drum body, and can be accurately positioned in the drum width direction. As a result, in the forming drum body, the tire material can be formed into a cylindrical shape with reduced variation in the drum width direction, which is advantageous for productively manufacturing a high-quality cylindrical tire member.

### Brief Description of Drawings

FIG. 1 is an explanatory diagram illustrating an example of a manufacturing device for a cylindrical tire member according to an embodiment in a plan view.
FIG. 2 is an explanatory diagram illustrating the manufacturing device of FIG. 1 in a front view.
FIG. 3 is an explanatory diagram illustrating the manufacturing device of FIG. 1 in a side view.
FIG. 4 is an explanatory diagram illustrating a state in which a forming drum body of FIG. 1 is moved to one winding position in a plan view.
FIG. 5 is an explanatory diagram illustrating the forming drum body of FIG. 4 in a side view.
FIG. 6 is an explanatory diagram illustrating a state in which a tire material is wound around the forming drum body at the winding position of FIG. 4.
FIG. 7 is an explanatory diagram illustrating a state in which the forming drum body of FIG. 6 is moved to the other winding position in a plan view.
FIG. 8 is an explanatory diagram illustrating the forming drum body of FIG. 7 in a side view.
FIG. 9 is an explanatory diagram illustrating a state in which the tire material is wound around the forming drum body at the winding position of FIG. 7.

### Description of Embodiments

Hereinafter, a manufacturing device and method for a cylindrical tire member according to an embodiment of the present invention will be described based on embodiments with reference to the drawings.

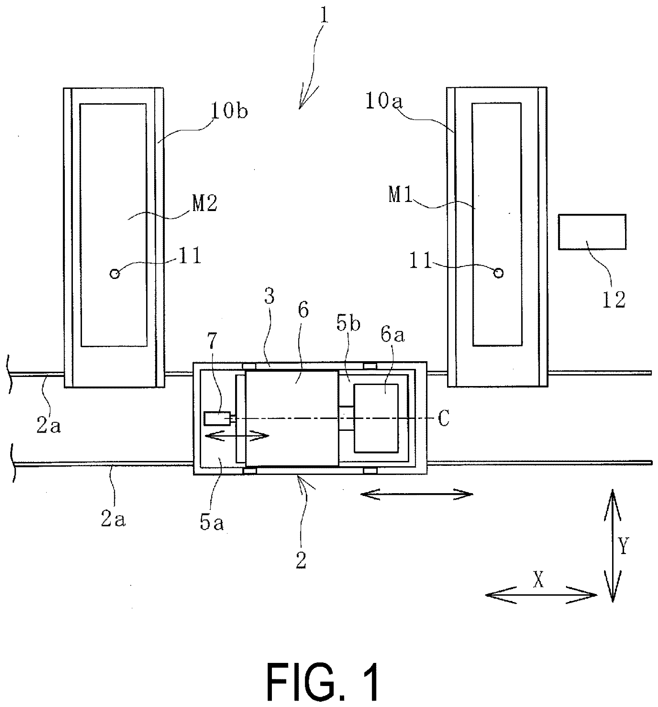

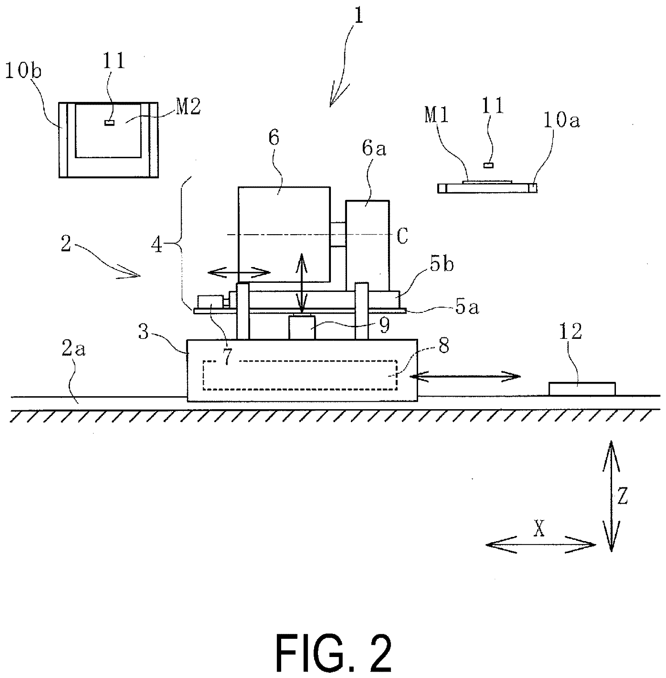

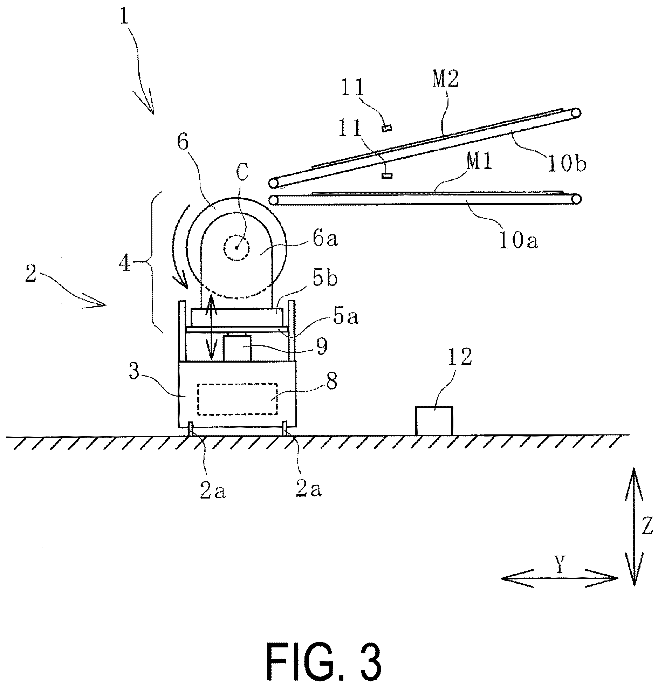

By using an embodiment of a manufacturing device 1 for a cylindrical tire member illustrated in FIGS. 1 to 3, band-like tire materials M1 and M2 supplied in a flat state by conveyors 10a and 10b are wound around a forming drum body 6 to manufacture a cylindrical tire member M. For example, an innerliner and a carcass material are used as the tire materials M1 and the M2, and are sequentially supplied to the forming drum body 6, and an innerliner layer and a carcass layer are manufactured and layered as the cylindrical tire member M. The innerliner layer and the carcass layer are used to form a green tire G. The formed green tire G is vulcanized to manufacture a tire T.

The manufacturing device 1 includes the conveyor 10a and 10b that supply the tire materials M1 and M2 in a flat state, a drum unit 2 including the forming drum body 6, a slide movement mechanism 8 that slides and moves the drum unit 2 in the drum width direction, and a vertical movement mechanism 9 that vertically moves the forming drum body 6. In this embodiment, the manufacturing device 1 further includes a sensor 11 and a control unit 12. X, Y, and Z arrows in the drawings respectively indicate the width direction, the front-rear direction, and the height direction of the manufacturing device 1 (the forming drum body 6), and are directions orthogonal to each other. In the drawings, the direction from the conveyors 10a and 10b toward the forming drum body 6 in the front-rear direction (Y-direction) is the front.

The conveyors 10a and 10b are belt conveyors or similar conveying measures. A plurality of conveyors 10a and 10b are arranged side by side in the drum width direction. Each of the conveyors 10a and 10b is basically fixed at a certain position on the ground and does not move. In this embodiment, leading ends of the respective conveyors 10a and 10b are set at substantially the same position in the front-rear direction, and are set at slightly different positions in the vertical direction. The leading ends of the respective conveyors 10a and 10b may be set at different positions in the front-rear direction, or may be set at substantially the same position in the vertical direction.

The tire materials M1 and M2 supplied by the conveyors 10a and 10b are wound around the forming drum body 6 to form a cylindrical shape. A drum axial center C of the forming drum body 6 extends in the X-direction. The forming drum body 6 is rotated about the drum axial center C by the rotation drive unit 6a.

The drum unit 2 is an entire structure including a base portion 3, an upper structure portion 4, the slide movement mechanism 8, and the vertical movement mechanism 9. The drum unit 2 is divided into the base portion 3 and the upper structure portion 4 in the vertical direction, and the upper structure portion 4 is disposed above the base portion 3. The base portion 3 and the vertical structure portion 4 are connected by the vertical movement mechanism 9.

The base portion 3 is placed on a guide rail 2a extending in the drum width direction on the ground. A drive motor and the like constituting a slide movement mechanism 8 are installed on the base portion 3. As the slide movement mechanism 8, various known mechanisms for moving the base portion 3 along the guide rail 2a can be used. When the base portion 3 is moved along the guide rail 2a by the slide movement mechanism 8, the drum unit 2 including the forming drum body 6 is moved in the drum width direction.

The upper structure portion 4 includes a placement plate 5a, a slide plate 5b, the forming drum body 6, a rotation drive unit 6a, and a drum movement mechanism 7. The forming drum body 6 and the rotation drive unit 6a are disposed on the slide plate 5b disposed on the placement plate 5a. The slide plate 5b is engaged with, for example, a groove or the like formed in the placement plate 5a and extending in the drum width direction. The drum movement mechanism 7 is disposed on the placement plate 5a.

In the upper structure portion 4, the drum movement mechanism 7 moves the forming drum body 6 in the drum width direction. In this embodiment, when the slide plate 5a is moved in the drum width direction with respect to the placement plate 5b by the drum movement mechanism 7, the forming drum body 6 and the rotation drive unit 6a are moved in the drum width direction. As the drum movement mechanism 7, various known mechanisms such as a fluid cylinder and a rod that is advanced and withdrawn by a servo motor can be used. The drum movement mechanism 7 is a mechanism different from the slide movement mechanism 8.

The vertical movement mechanism 9 vertically moves the upper structure portion 4 with respect to the base portion 3. As the vertical movement mechanism 9, various known mechanisms such as a fluid cylinder and a rod that is advanced and withdrawn by or a servo motor can be used. In this embodiment, the vertical movement mechanism 9 is interposed between the base portion 3 and the placement plate 5a. When the upper structure portion 4 is moved up and down with respect to the base portion 3 by the vertical movement mechanism 9, the forming drum body 6 moves up and down.

The sensor 11 is installed above each of the conveyors 10a and 10b. The sensor 11 detects the presence and the position of the tire materials M1 and the M2 placed on the conveyors 10a and 10b. As the sensor 11, various known noncontact type detection sensors may be used. A plurality of the sensors 11 may be disposed at intervals in the width direction (X-direction) of the tire materials M1 and M2, or a plurality of the sensors 11 may be disposed at intervals in the feeding direction (Y-direction). Detection data from the sensor 11 is successively input into the control unit 12. The detection data includes widthwise positions of the tire materials M1 and M2 on the conveyors 10.

The control unit 12 performs computational processing using input data, stored data, and the like, and controls various components of the manufacturing device 1. Various known computers may be used as the control unit 12.

Next, an example of a procedure of manufacturing the cylindrical tire member M using this manufacturing device 1 will be described.

In this manufacturing device 1, the tire materials M1 and M2 are supplied to the forming drum body 6 in a flat state by the plurality of conveyors 10a and 10b arranged side by side in the drum width direction with respect to the forming drum body 6 and wound around the forming drum body 6. When each of the tire materials M1 and M2 is supplied, the forming drum body 6 is moved to and installed near leading edge portions (winding positions P1 and P2) of the conveyors 10a and 10b that supply the tire materials M1 and M2.

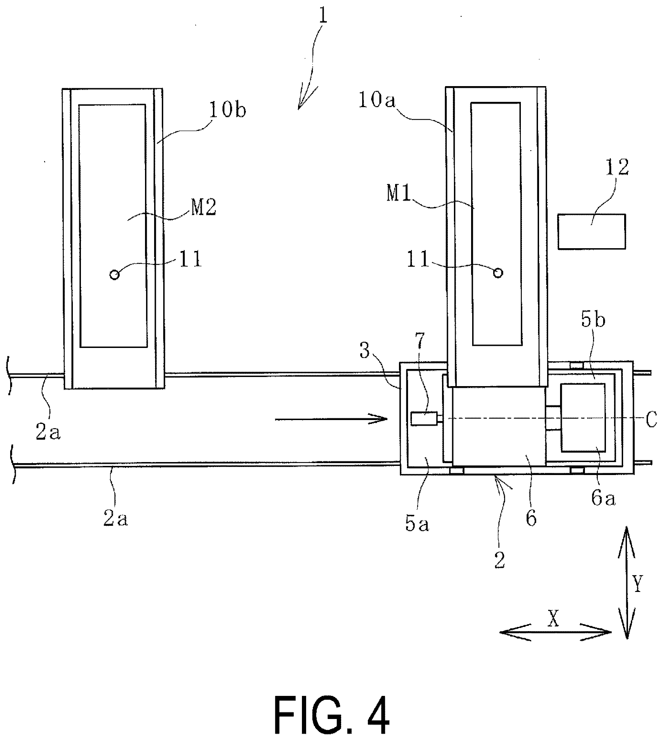

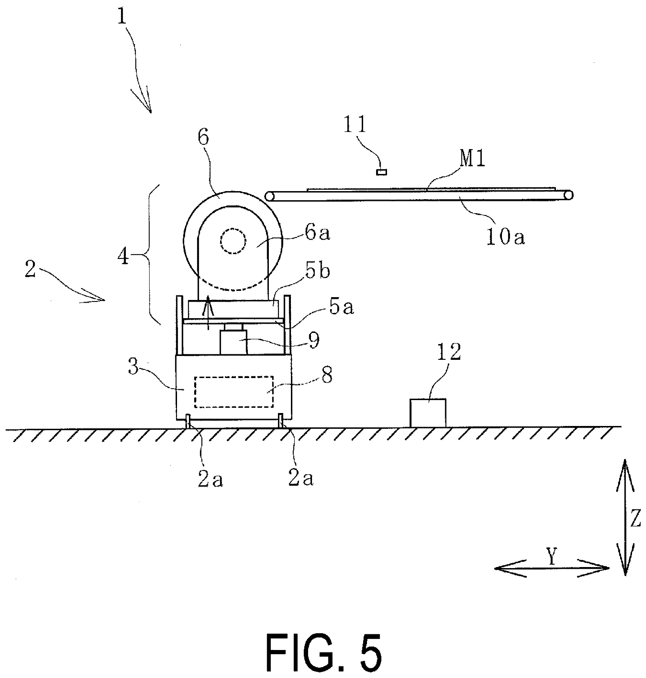

First, as illustrated in FIGS. 4 and 5, the forming drum body 6 is moved to and installed at the winding position P1 near the front edge portion of the conveyor 10a that supplies the tire material M1 to the forming drum body 6. Therefore, as illustrated in FIG. 4, the drum unit 2 is moved integrally in the drum width direction by the slide movement mechanism 8 and positioned at the winding position P1 (X-direction position). In addition, as illustrated in FIG. 5, the upper structure portion 4 is moved in the vertical direction by the vertical movement mechanism 9 and is positioned at the winding position P1 (Z-direction position). The winding position P1 is an appropriate position where the tire material M1 can be smoothly transferred from the conveyor 10a to the forming drum body 6.

The position of the front edge portion of the conveyor 10a (positions in the X-direction, the Y-direction, and the Z-direction) is preset, and the position of the forming drum body 6 in the Y-direction is also preset. Therefore, the winding position P1 is determined in advance by performing a preliminary test or the like in which the tire material M1 is transferred from the conveyor 10a to the forming drum body 6 while variously changing the position (positions in the X-direction and Z-direction) of the forming drum body 6. The winding position P2 is determined in the same manner for the other conveyor 10b.

The winding position P1 is determined in advance in this manner, in supplying the tire material M1 to the forming drum body 6, the drum-widthwise position of the forming drum body 6 is adjusted by using the slide movement mechanism 8, the vertical position of the forming drum body 6 is adjusted by using the vertical movement mechanism 9, and the forming drum body 6 at the winding position P1 is installed. To be specific, in order to install the forming drum body 6 at the winding position P1, the control unit 12 controls the slide movement mechanism 8 to adjust the drum-widthwise position of the forming drum body 6 based on the drum-widthwise position of the leading edge portion of the conveyor 10a that supplies the tire material M1. Further, the vertical position of the forming drum body 6 is adjusted by controlling the vertical movement mechanism 9 by the control unit 12 based on the vertical position of the leading edge portion of the conveyor 10a. By controlling in this manner, the forming drum body 6 can be automatically installed at the winding position P1. In order to more quickly set the forming drum 6 at the winding position P1, it is preferable to move the forming drum body 6 in the vertical direction by the vertical movement mechanism 9 and position the forming drum body 6 at the height position of the winding position P1 while moving the forming drum body 6 (drum unit 2) in the drum width direction toward the winding position P1 by the slide movement mechanism 8.

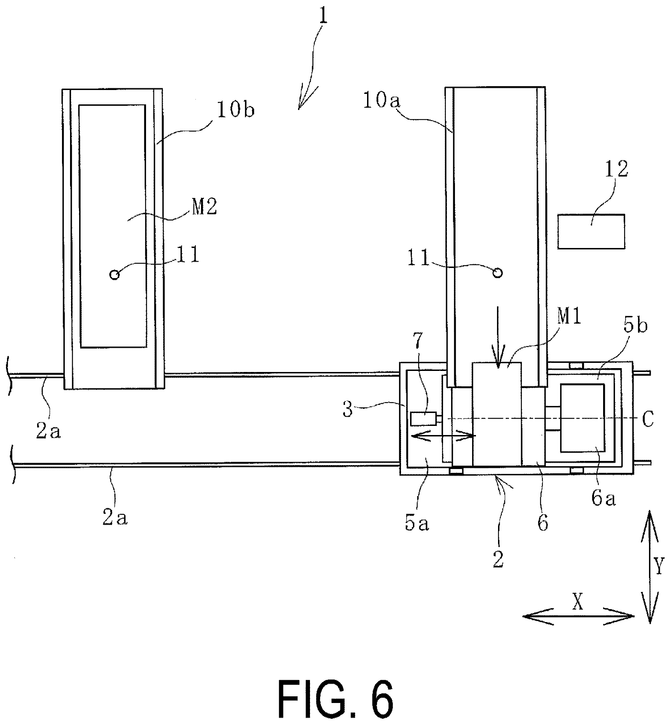

Next, as illustrated in FIG. 6, the forming drum body 6 is rotated about a drum axial center C at the winding position P1, and the tire material M1 supplied by the conveyor 10a is wound. Since the tire material M1 placed on the conveyor 10a meanders in the drum width direction to some extent, the forming drum body 6 is moved in the drum width direction by the drum movement mechanism 7, thereby correcting the variation (meandering degree) in a drum-widthwise position of the tire material M1 wound around the forming drum body 6.

In this embodiment, the tire material M1 in a flat state on the conveyor 10a is detected by the sensor 11, and the widthwise position data of the tire material M1 detected by the sensor 11 is successively input to the control unit 12. The control unit 12 compares the inputted widthwise position data of the tire material M1 with the stored reference value with respect to the widthwise position data of the tire material M1, and controls the drum movement mechanism 7 to move the forming drum body 6 in the drum width direction so as to reduce the difference between the two. The reference value indicates the widthwise position of the tire material M1 when the tire material M1 does not meander. That is, the tire material M1 is wound around the forming drum body 6 while adjusting the drum-widthwise position of the forming drum body 6 so as not to wind the tire material M1 in a meandering state. That is, the tire material M1 centered such that a widthwise center position of the tire material M1 coincides with a widthwise center position of the forming drum body 6 is wound. As a result, the tire member M in which the tire material M1 is formed into a cylindrical shape is manufactured in the forming drum body 6.

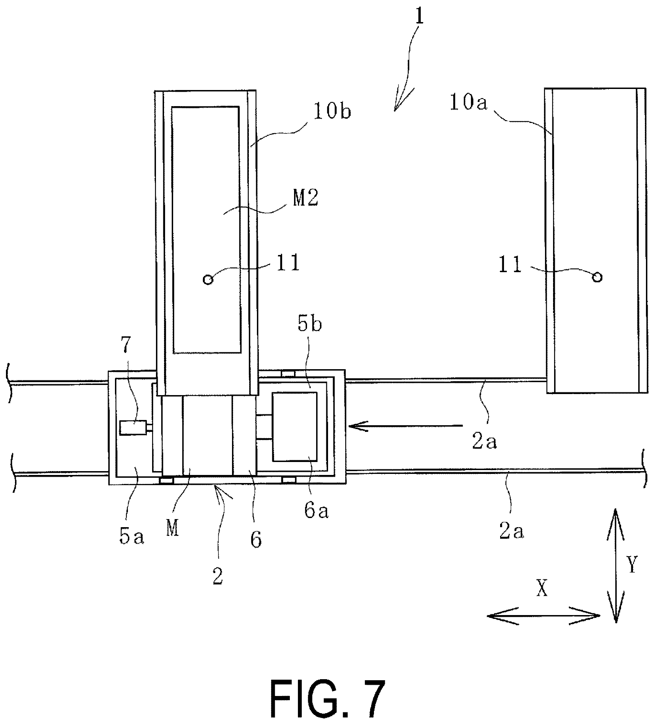

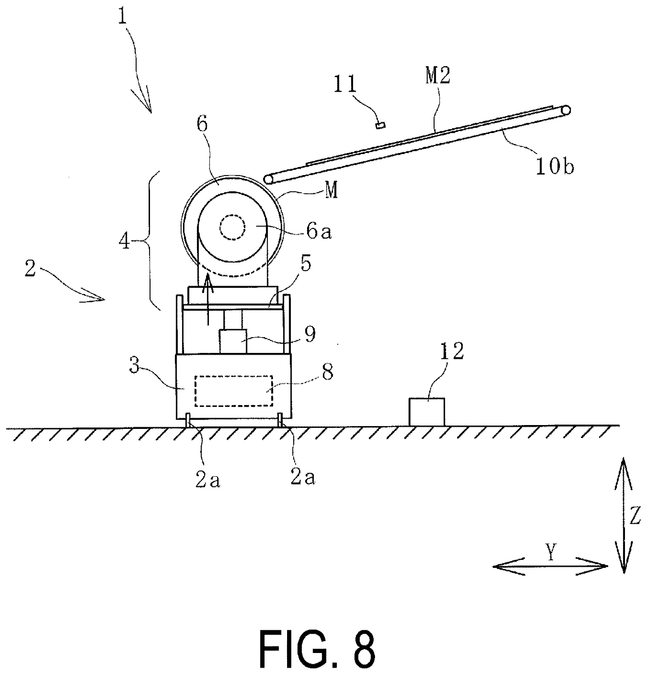

Next, as illustrated in FIGS. 7 and 8, in order to manufacture the cylindrical tire member M by the tire material M2 supplied from the other conveyor 10b, the forming drum body 6 is moved to the winding position P2 near the front edge portion of the other conveyor 10b. The procedure for installing the forming drum body 6 at the winding position P2 is the same as the procedure for installing the forming drum body 6 at the winding position P1 described above. That is, as illustrated in FIG. 7, the drum unit 2 is integrally moved in the drum width direction by the slide movement mechanism 8. As illustrated in FIG. 8, the upper structure portion 4 is moved in the vertical direction by the vertical movement mechanism 9.

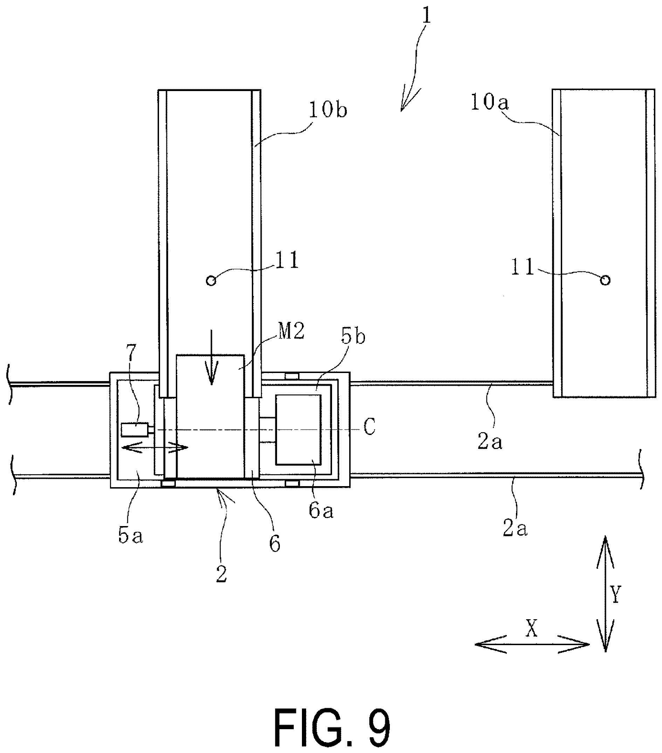

Next, as illustrated in FIG. 9, the forming drum body 6 is rotated about the drum axial center C at the winding position P2, and the tire material M2 supplied by the conveyor 10b is wound. The tire material M2 placed on the conveyor 10b meanders in the drum width direction to a certain extent. Therefore, in the same procedure as in the case of the tire material M1 described above, the forming drum body 6 is moved in the drum width direction by the drum movement mechanism 7, thereby correcting the variation (meandering degree) in the drum-widthwise position of the tire material M2 wound around the forming drum body 6.

Since the cylindrical tire member M has already been manufactured and wound around the forming drum body 6, the tire material M2 is wound around an outer circumferential surface of the tire member M at the winding position P2. Therefore, at the winding position P2, the tire member M formed into a cylindrical shape by the tire material M2 is manufactured in a state of being layered on the tire member M already manufactured on the forming drum body 6.

As described above, in the manufacturing device 1, by using the slide movement mechanism 8 and the vertical movement mechanism 9, the forming drum body 6 can be accurately moved from the respective conveyors 10a and 10b to the appropriate winding positions P1 and P2 where the tire materials M1 and M2 can be smoothly transferred. Accordingly, it is not necessary to excessively slow down the speed of transferring the tire materials M1 and M2 to the forming drum body 6, which is advantageous for transferring the tire materials to the forming drum body 6 quickly without deviation.

Then, at the winding positions P1 and P2, the forming drum body 6 is moved in the drum width direction by the drum movement mechanism 7, whereby the tire materials M1 and M2 can be wound around the forming drum body 6 while correcting the variation in the drum-widthwise positions of the tire materials M1 and M2. The drum movement mechanism 7 moves not the drum unit 2 but the forming drum body 6 (in this embodiment, only the forming drum body 6, the rotation drive unit 6a, and the slide plate 5b), which is a component of the drum unit 2, in the drum width direction. Since these forming drum body 6 and accessories are lighter and smaller than the drum unit 2, it is advantageous to quickly move the forming drum body 6 to a desired drum-widthwise position.

That is, the forming drum body 6 can be immediately moved to one side and the other side in the drum width direction with good response so as to correct the variation in the widthwise position of the tire materials M1 and M2 to be wound. The drum unit 2 with a large weight generates large inertial force, making it difficult to move quickly in the width direction. However, this embodiment does not have such a problem. Accordingly, the tire materials M1 and M2 can be positioned in the drum width direction with high accuracy without decreasing the winding speed (drum rotation speed) of the tire materials M1 and M2. As a result, in the forming drum body 6, the tire materials M1 and M2 can be formed into a cylindrical shape with reduced variation in the drum width direction, which is advantageous for productively manufacturing a high-quality cylindrical tire member M. Further, in the case of layering the tire members M as in this embodiment, the layering deviation of the tire members M in the drum width direction can be reduced, which is advantageous in obtaining a multilayer structure of the cylindrical tire member having excellent quality.

In FIG. 1, the conveyor 10a is disposed at one of two positions spaced apart in the width direction, and the conveyor 10b is disposed at the other position. However, the number of the conveyors 10a and 10b disposed at the respective positions is not limited to one, and a plurality of (for example, two to four) conveyors may be disposed in tandem. In the case where a plurality of conveyors 10a are arranged in tandem at one of the positions, a plurality of tire materials M1 are sequentially and continuously supplied to the forming drum body 6 by the respective conveyors 10a arranged in tandem, and each of the tire materials M1 is formed into a cylindrical shape and layered. As in the embodiment described above, by moving the forming drum body 6 in the width direction with respect to each conveyor 10a fixed at a predetermined position, the tire material M1 supplied sequentially and continuously is prevented from meandering and is wound on the forming drum body 6 while being positioned at a reference position Px in the width direction (in other words, while the widthwise position data of the tire material M1 inputted to the control unit 12 is made to coincide with the stored reference value with respect to the widthwise position data of the tire material M1). That is, when the plurality of tire materials M1 sequentially supplied are centered and wound around the forming drum body 6, the position of each conveyor 10a arranged in tandem is fixed. Therefore, each tire material M1 can be continuously supplied to the forming drum body 6 through each conveyor 10a.

On the other hand, in a method in which the forming drum body 6 is fixed at a predetermined position and the conveyor 10a directly in front of the forming drum body 6 is moved in the width direction to center and wind each of the sequentially-supplied tire material M1 around the forming drum body 6, the tire material M1 cannot be transferred from the rear conveyor 10a to the conveyor 10a directly in front of the forming drum body 6, while the conveyor 10a directly in front of the forming drum body 6 is moved in the width direction. As a result, the supply of the tire material M1 to the forming drum body 6 is delayed, and an extra waiting time is generated until the centering step by the conveyor 10a directly in front is completed. This reduces productivity of the cylindrical tire member M. Therefore, as described above, in the method in which the forming drum body 6 is moved in the width direction with respect to each conveyor 10a fixed at a predetermined position, thereby positioning the tire material M1 continuously supplied and sequentially winding the tire material M1 at the reference position Px of the forming drum body 6 in the width direction while suppressing meandering, an extra waiting time until each tire material M1 is supplied to the forming drum body 6 is reduced, which is advantageous for improving the productivity of the cylindrical tire member M. The same applies to the case where a plurality of conveyors 10b are disposed in tandem at the other position, and in the method in which the forming drum body 6 is moved in the width direction with respect to the conveyors 10b fixed at a predetermined position and disposed in tandem, and each of the plurality of tire materials M2 sequentially supplied are centered and wound around the forming drum body 6, which is advantageous in improving the productivity of the cylindrical tire member M.

In the embodiment, the leading ends of the respective conveyors 10a and 10b are set at positions above the forming drum body 6, but may also be set at positions below the forming drum body 6. The leading end of one conveyor 10a may be set at a position above the forming drum body 6, and the leading end of the other conveyor 10b may be set at a position below the forming drum body 6. The number of the conveyors 10a and 10b is not limited to two, and may be three or more. In addition, in the embodiment, each of the conveyors 10a and 10b is disposed on only one side of the forming drum body 6 in the front-rear direction (Y-direction), but may also be disposed on both sides. That is, in FIG. 1, the conveyors 10a and 10b extending in the upper region with respect to the forming drum body 6 are installed, but one or a plurality of conveyors extending in the lower region may be additionally installed.

The forming drum body 6 is not limited to various known general forming drums, and may be, for example, a so-called rigid core having an outer surface substantially the same as the inner surface of the tire T to be manufactured.

### Reference Signs List

1 Manufacturing device
2 Drum unit
2a Guide rail
3 Base portion
4 Upper structure portion
5a Placement plate
5b Slide plate
6 Forming drum body
6a Rotation drive unit
7 Drum movement mechanism
8 Slide movement mechanism
9 Vertical movement mechanism
10 (10a, 10b) Conveyor
11 Sensor
12 Control unit
M1, M2 Band-like tire material
M Tire member

## Claims

1. A manufacturing device for a cylindrical tire member, the manufacturing device comprising:
a conveyor configured to supply a tire material having a band shape in a flat state;
a forming drum body around which the tire material supplied by the conveyor is wound and formed into a cylindrical shape;
a plurality of the conveyors arranged side by side in the drum width direction;
a slide movement mechanism configured to slide the forming drum body in a drum width direction; and
a vertical movement mechanism configured to vertically move the forming drum body;
an upper structure portion including the forming drum body being disposed on a base portion, the base portion and the upper structure portion being connected by the vertical movement mechanism,
a drum unit including the base portion, the upper structure portion, and the vertical movement mechanism being integrally moved in the drum width direction by the slide movement mechanism,
the upper structure portion including a drum movement mechanism configured to move the forming drum body in the drum width direction, and the drum movement mechanism being installed as a different mechanism from the slide movement mechanism.

2. The manufacturing device for a cylindrical tire member according to claim 1, comprising:
a sensor configured to detect the tire material in a flat state on the conveyor; and
a control unit to which widthwise position data of the tire material detected by the sensor is inputted, wherein
the control unit controls the drum movement mechanism based on the widthwise position data, whereby a drum-widthwise position of the forming drum body is adjusted, and the tire material is wound around the forming drum body.

3. The manufacturing device for a cylindrical tire member according to claim 1 or 2, wherein
when the tire material is supplied from the conveyor, a drum-widthwise position of the forming drum body is adjusted by controlling the slide movement mechanism based on a drum-widthwise position of a leading edge portion of the conveyor,
a vertical position of the forming drum body is adjusted by controlling the vertical movement mechanism based on a vertical position of the leading edge portion of the conveyor, and
the forming drum body is installed at a winding position near a front edge portion of the conveyor.

4. A manufacturing method for a cylindrical tire member comprising causing a plurality of conveyors to be arranged side by side in a drum width direction with respect to a forming drum body, in winding a tire material having a band shape supplied in a flat state by each of the conveyors around the forming drum body to form a cylindrical shape, using a slide movement mechanism configured to move the forming drum body in the drum width direction and a vertical movement mechanism configured to move the forming drum body in a vertical direction, moving the forming drum body to a winding position near a front edge portion of the conveyor configured to supply the tire material to the forming drum body, and then winding the tire material supplied by the conveyor around the forming drum body at the winding position, the manufacturing method comprising:
disposing an upper structure portion including the forming drum body on a base portion and connecting the base portion and the upper structure portion by a vertical movement mechanism, the upper structure portion including, separately from the slide movement mechanism, a drum movement mechanism configured to move the forming drum body in the drum width direction;
integrally moving a drum unit including the base portion, the upper structure portion, and the vertical movement mechanism in the drum width direction by the slide movement mechanism, vertically moving the upper structure portion by the vertical movement mechanism, and moving the forming drum body to the winding position; and
at the winding position, by moving the forming drum body in the drum width direction by the drum movement mechanism, winding the tire material around the forming drum body while correcting a variation in a drum-widthwise position of the tire material.
